# EUROPÄISCHE PATENTSCHRIFT

(11) **EP 2 781 201 B1**
(45) Veröffentlichungstag und Bekanntmachung des Hinweises auf die Patenterteilung: **28.02.2018**
(21) Anmeldenummer: 13160076.9
(22) Anmeldetag: 20.03.2013
(51) Int. Cl.: A61C 1/00

(54) **Filterpatrone für eine medizinische, insbesondere dentale, Kupplungsvorrichtung**
Filter cartridge for a medical, in particular dental coupling device
Cartouche de filtre pour un dispositif d'accouplement médical, notamment dentaire

(43) Veröffentlichungstag der Anmeldung: 24.09.2014
(73) Patentinhaber: W & H Dentalwerk Bürmoos GmbH, 5111 Bürmoos (AT)
(72) Erfinder: Hörmann, Udo, 5411 Oberalm (AT); Hofbauer, Manfred, 5111 Bürmoos (AT); Schmiedlechner, Karl, 5121 Ostermiething (AT); Schuh, Walter, 5111 Bürmoos (AT)

(56) Entgegenhaltungen:
- WO-A1-2009/031711
- US-A- 5 556 279
- US-A1- 2002 115 039
- US-A1- 2004 222 141

## Beschreibung

Die vorliegende Erfindung bezieht sich auf eine Filterpatrone für eine medizinische, insbesondere dentale, Kupplungsvorrichtung nach dem Oberbegriff des Anspruchs 1 sowie auf einen medizinischen, insbesondere dentalen, Adapter und auf ein medizinisches, insbesondere dentales, Hand- oder Winkelstück, aufweisend eine derartige Filterpatrone.

Medizinische, insbesondere dentale, Hand- oder Winkelstücke dienen zum Antrieb medizinischer Werkzeuge, welche insbesondere zur Bearbeitung von hartem oder weichem Gewebe ausgebildet sind. Hierzu weisen die Handstücke eine Werkzeugaufnahme zur Aufnahme der Behandlungswerkzeuge in dem Handstück auf. Die Werkzeugaufnahme wird mittels eines vorzugsweise mit Druckgas betriebenen Turbinenantriebs, welcher insbesondere einen im Kopf angeordneten Rotor aufweist, in Rotation versetzt. Vorzugsweise ist der Kopf des Handstücks gewinkelt zu dessen Handstückteil angeordnet, so dass ein dentales Winkelstück vorliegt. Um das zumindest eine Laufrad in den Hand- oder Winkelstücken mit einem Antriebsfluid, insbesondere Druckluft, zu beaufschlagen, weisen die Hand- oder Winkelstücke jeweils zumindest eine Versorgungsleitung auf, welche über eine Kupplungsvorrichtung mit einem Versorgungsschlauch einer medizinischen, insbesondere dentalen, verbindbar ist. Zur Kühlung der angetriebenen Behandlungswerkzeuge und der Arbeitsbereiche verfügen die medizinischen Hand- oder Winkelstücke zusätzlich zu den Versorgungsleitungen über Kanäle durch die Spraywasser und/oder Sprayluft zu den Werkzeugaufnahmen der Hand- oder Winkelstücke geleitet werden. Das Spraywasser und/ oder die Sprayluft werden ebenfalls von der dentalen Einheit zur Verfügung gestellt und mittels der Versorgungsschläuche über die Kupplungsvorrichtung den dentalen Hand- oder Winkelstücken zur Verfügung gestellt.

Durch die äußerst geringen Durchmesser der Spraykanäle und nicht vermeidbaren Verunreinigungen in den zugeführten Spraymedien, kommt es regelmäßig zu Verstopfungen in den Kanälen der dentalen Hand- oder Winkelstücke, welche den Mediendurchfluss teilweise oder sogar ganz behindern. Um dem entgegenzuwirken ist es bekannt in den Spraykanälen bzw. zwischen den Spraykanälen der mehreren Bauteile, insbesondere zwischen den Versorgungsschläuchen und den Hand- oder Winkelstücken, Filterelemente anzuordnen. Diese können in regelmäßigen Intervallen ausgetauscht werden.

Insbesondere ist es bekannt in die Versorgungsschläuche oder zwischen den Versorgungsschläuchen und den Hand- oder Winkelstücken Zwischenstücke mit Filterelementen zu kuppeln, welche an die korrespondierenden Kupplungsteile der Hand- oder Winkelstücke sowie der Versorgungsschläuche anschließbar sind. Hierdurch wird es ermöglicht die Zwischenstücke, insbesondere die Filterelemente, in einfacher Weise zu wechseln. Derartige Filterelemente sind beispielsweise aus der US 5,556,279 und der US 2004/0222141 A1 bekannt. Als nachteilig erweisen sich hierbei jedoch die hohen Kosten für die Fertigung eines solchen Zwischenstücks, insbesondere die Fertigung der jeweiligen Kupplungsteile für die Hand- oder Winkelstücke und für die Versorgungsschläuche. Des Weiteren erweisen sich die zusätzlichen Schnittstellen zur Medienübergabe zwischen den mehreren Bauteilen, insbesondere zwischen den mehreren Medienkanälen, als nachteilig. Zusätzliche Medienübergaben erhöhen die Gefahr eines ungewollten Medienaustritts zwischen den Kupplungsteilen. Auch die Vergrößerung, insbesondere die Verlängerung der Aufbereitungsinstrumente durch die zusätzlichen Zwischenstücke, stellt für den Anwender einen weiteren erheblichen Nachteil dar.

Des Weiteren ist es bekannt die Filterelemente mittels Filterpatronen direkt in den Spraykanälen der Hand- und Winkelstücke aufzunehmen bzw. einzusetzen. Eine derartige Filterpatrone ist aus der US 2002/0115039 A1 bekannt. Hierbei sind die Filterelemente zur Reinigung der zugeführten Medien in den Patronen, insbesondere im Inneren der Patronen angeordnet. Als nachteilig dieser Ausgestaltung der Filterelemente erweist sich, trotz der einfachen Austauschbarkeit der Filterpatronen, die Reinigbarkeit der Filterelemente. Durch die Anordnung der Filterelemente im Inneren der Patronen, insbesondere in deren Gehäuse, sind diese schlecht bzw. nicht reinigbar. Daher handelt es sich bei diesen Filterelementen generell um Einwegfilter. Des Weiteren ermöglichen die bekannten Filterpatronen in den Spraykanälen einen Rückfluss der bereits gereinigten Medien zurück in die Filterelemente, wodurch eine erneute Verunreinigung der bereits gereinigten Medien erfolgt.

Der vorliegenden Erfindung liegt daher die Aufgabe zugrunde eine Filterpatrone insbesondere für eine medizinische, insbesondere dentale, Kupplungsvorrichtung zur Verbindung einer an einem ersten Kupplungsteil angeordneten ersten Medienleitung mit einer an einem zweiten Kupplungsteil angeordneten zweiten Medienleitung zu schaffen, welche in einfacher Wiese austauschbar und reinigbar ist, so dass diese mehrfach verwendet werden kann. Insbesondere liegt der Erfindung die Aufgabe zugrunde eine Filterpatrone zu schaffen, welche einen Rückfluss der bereits gereinigten Medien in das Filterelement der Filterpatrone verhindert.

Zur Lösung dieser Aufgabe wird eine Filterpatrone gemäß Anspruch 1 vorgestellt.

Gemäß Anspruch 1 ist das Filterelement des Filterabschnitts durch eine hohle Filterhülse mit einer Mantelfläche gebildet, die an ihrem freien Ende durch eine Stirnwand geschlossen ist. Die Mantelfläche und/ oder die Stirnfläche der Filterhülse weisen hierbei eine Mehrzahl von Bohrungen auf. Die Hülse mit den Bohrungen übernimmt hierbei die Funktion eines Siebes, um die Verunreinigungen aus dem Spraymedium herauszufiltern. Dazu weisen die Bohrungen bevorzugt einen Durchmesser von 0,3 Millimeter auf. Alternativ ist es möglich, dass der Filterabschnitt aus einem durchströmbaren Filtermaterial besteht. Dieses ist bevorzugt Bestandteil der Mantelfläche oder Stirnfläche der Filterhülse. Als Materialien zum Filtern der Spraymedien kommen hierbei bevorzugt poröse Filtermaterialien, wie zum Beispiel Keramik, zum Einsatz. Des Weiteren ist es möglich, dass der Filter als durchströmbare Membran ausgebildet ist.

Gemäß einem bevorzugten Ausführungsbeispiel weist der Filterabschnitt einen kleineren Querschnitt als der jeweilige Spraykanal auf, in den der Filterabschnitt einsetzbar ist, so dass die Filterhülse neben der Stirnfläche auch von der Mantelfläche umströmbar ist. Hierbei ist es notwendig den jeweiligen Spraykanal in axialer Richtung abzudichten. Hierzu umfasst der Filterabschnitt neben den mehreren Bohrungen und/ oder dem Filtermaterial bevorzugt einen Aufnahmebereich für eine Dichtscheibe.

Um den Filterabschnitt, insbesondere die Filterhülse mit den mehreren Bohrungen, von deren Innen- sowie Außenseite her zu reinigen, ist der Filterabschnitt der Patrone bevorzugt lösbar von dem Kupplungsabschnitt ausgebildet.

Gemäß einem weiteren Ausführungsbeispiel ist der Kupplungsabschnitt der Filterpatrone als Steckverbindung ausgebildet, so dass die Patrone mit einer Innenseite eines Spraykanals mittels Reibschluss kuppelbar ist. Hierzu ist der Kupplungsabschnitt bevorzugt als Kupplungshülse ausgebildet, deren Außendurchmesser bevorzugt dem Innendurchmesser des Spraykanals entspricht, in den der Filterabschnitt einsetzbar ist. Alternativ ist der Kupplungsabschnitt der Filterpatrone als Schraubverbindung, insbesondere mit einem Außengewinde, ausgebildet. Die Patrone ist hierbei bevorzugt über das Außengewinde mit einem Innengewinde an der Innenseite eines Spraykanals kuppelbar.

Des Weiteren weist der Kupplungsabschnitt der Patrone an seinem Umfang bevorzugt eine Ausnehmung mit einem darin angeordneten Dichtelement zum radialen Abdichten des die Filterpatrone aufnehmenden Spraykanals auf. Ein Flansch dient neben einer zusätzlichen axialen Abdichtung zum Positionieren der Patrone in der Sprayleitung. Alternativ ist es möglich, dass die Patrone mit einer Außenseite des ersten oder zweiten Spraykanals kuppelbar ist. Hierbei wäre die Steck- oder Schraubverbindung sowie die Ausnehmung mit dem Dichtelement an der Innenseite des Kupplungsabschnitts angeordnet.

Gemäß einem weiteren Ausführungsbeispiel ist der Regelungsabschnitt durch ein Rückschlagventil mit einem Ventilsitz und einem entgegen der Strömungsrichtung des zu reinigende Mediums und dem Ventilsitz vorgespannten Regelungskörper gebildet. Der Ventilsitz des Rückschlagventils ist hierbei bevorzugt zwischen dem Filterabschnitt und dem Kupplungsabschnitt der Filterpatrone angeordnet, um einen Rückfluss des bereits gereinigten Mediums von dem Medienleitungsabschnitt in den Filterabschnitt zu vermeiden. Um neben dem Filterabschnitt auch den Regelungsabschnitt und den Kupplungsabschnitt reinigbar auszubilden, ist der Regelungsabschnitt bevorzugt lösbar von der Filterpatrone. Hierdurch ist es möglich alle Bestandteile der Filterpatrone einzeln von Innen und Außen her zu reinigen.

Im Rahmen der Erfindung versteht es sich selbstverständlich, dass die erfindungsgemäße Filterpatrone nicht auf die oben beschriebenen Ausführungsbeispiele und auf die Verwendung bei einer medizinischen, insbesondere dentalen, Kupplungsvorrichtung gemäß dem oben angeführten Ausführungsbeispiel beschränkt ist. Die Filterpatrone kann vielmehr bei einer Vielzahl von medizinischen, insbesondere dentalen, Instrumenten mit Spraykanälen zum Einsatz kommen, bei denen neben einer Filterung der durch die Kanäle geleitenden Medien eine Regelung des Durchflusses der Medien erwünscht ist.

Die vorliegende Filterpatrone zeichnet sich durch eine Reihe erheblicher Vorteile aus.

Durch die Ausbildung des Filterelements als Patrone, wobei der Filterabschnitt außerhalb des Patronengehäuses angeordnet ist, wird es ermöglicht das Filterelement zu reinigen. Hierdurch kann die Filterpatrone mehrfach verwenden werden. Des Weiteren wird durch die Ausbildung des Filterelements als Bauteil, welches lösbar von dem Kupplungsabschnitt der Patrone ist, es ermöglicht den Filterabschnitt auch von dessen Innenseite her zu reinigen.

Einen weiteren wesentlichen Vorteil der Filterpatrone bildet der Regelungsabschnitt zur Regelung des Mediendurchflusses eines zu reinigenden Mediums durch die Filterpatrone. Der Regelungsabschnitt, welcher bevorzugt durch ein Rückschlagventil mit einem Ventilsitz gebildet ist, welcher zwischen einem Filterabschnitt und einem Kupplungsabschnitt der Filterpatrone angeordnet ist, verhindert einen Rückfluss der bereits gereinigten Medien in den Filterabschnitt. Hierdurch wird eine erneute Verunreinigung der bereits gereinigten Medien vermieden.

Dadurch, dass der Regelungsabschnitt bevorzugt lösbar von der Filterpatrone ausgebildet ist, kann neben dem Filterabschnitt auch der Regelungsabschnitt und der Kupplungsabschnitt von Innen und Außen her gereinigt werden. Dies stellt einen weiteren erheblichen Vorteil dar.

Nachfolgend wird die Erfindung anhand mehrerer Ausführungsbeispiele und in Verbindung mit den beigefügten Zeichnungen erläutert.

Dabei zeigt:
Figur 1 ein erstes Ausführungsbeispiel der Filterpatrone in einer perspektivischen Darstellung,
Figur 2 das erste Ausführungsbeispiel der Filterpatrone in einer Schnittdarstellung,
Figur 3 einen Schnitt durch einen medizinischen, insbesondere dentalen, Adapter mit dem ersten Ausführungsbeispiel der Filterpatrone, wie in Figur 2 gezeigt, wobei der Adapter an einen Versorgungsschlauch gekuppelt ist,
Figur 3A ebenfalls in Schnittdarstellung einen Ausschnitt aus dem medizinischen, insbesondere dentalen, Adapter aus Figur 3,
Figur 4 einen Schnitt durch ein medizinisches, insbesondere dentales, Winkelstück mit einem zweiten Ausführungsbeispiel der Filterpatrone,
Figur 4A ebenfalls in Schnittdarstellung einen Ausschnitt aus dem medizinischen, insbesondere dentalen, Winkelstück aus Figur 4;

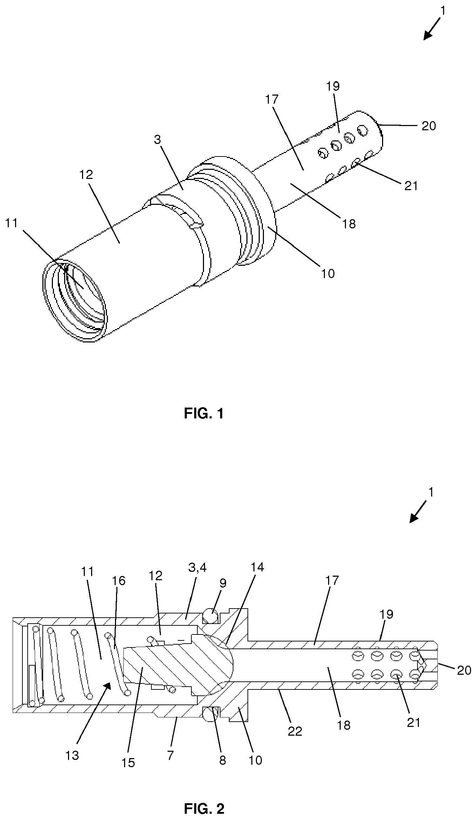

In Figur 1 ist ein erstes Ausführungsbeispiel der Filterpatrone 1 in einer perspektivischen Außendarstellung gezeigt. Die Filterpatrone 1 ist im Wesentlichen durch einen Kupplungsabschnitt 3 zur lösbaren Aufnahme der Patrone 1 in einer Medienleitung sowie durch einen Filterabschnitt 17 gebildet. Durch den Kupplungsabschnitt 3 erstreckt sich ein Medienleitungsabschnitt 11. Dieser umfasst einen Regelungsabschnitt 12 zur Regelung des Mediendurchflusses eines zu reinigenden Mediums durch die Filterpatrone 1. Der Filterabschnitt 17 steht ebenfalls in Fluidverbindung mit dem Medienleitungsabschnitt 11, wobei dieser außerhalb des Medienleitungsabschnitts 11 an dem Kupplungsabschnitt 3 der Filterpatrone 1 angeordnet ist. Der Filterabschnitt 17 ist hierbei durch eine hohle Filterhülse 18 mit einer Mantelfläche 19 gebildet, die an ihrem freien Ende durch eine Stirnwand 20 geschlossen ist. Die Stirnwand 20 und/ oder die Mantelfläche 19 weisen eine Mehrzahl von Bohrungen 21 auf, so dass der Filterabschnitt 17 längs und/ oder quer Medienleitungsabschnitt 11 verbunden. Der Flansch 10 dient zum axialen Abdichten einer die Filterpatrone 1 aufnehmenden Medienleitung. Wie in Figur 1 des Weiteren gezeigt wird, weist die Filterhülse 18 einen kleineren Querschnitt als der Kupplungsabschnitt 3 auf, welcher mit einer Innenseite einer Medienleitung kuppelbar ist. Dies ermöglicht, dass die Filterhülse 18, wenn sie in der Medienleitung aufgenommen ist, neben der Stirnfläche 20 auch von der Mantelfläche 19 umströmbar ist.

In Figur 2 ist die Filterpatrone 1 aus Figur 1 in einer Schnittdarstellung abgebildet. Der in dem Medienleitungsabschnitt 11 angeordnete Regelungsabschnitt 12 zur Regelung des Mediendurchflusses eines zu reinigenden Mediums durch die Filterpatrone 1, insbesondere durch den Filterabschnitt 17 und den Medienleitungsabschnitt 11, ist durch ein Rückschlagventil 13 mit einem Ventilsitz 14 und einem entgegen der Strömungsrichtung des zu reinigende Mediums und dem Ventilsitz 14 vorgespannten Regelungskörper 15 gebildet. Die Vorspannung des Regelungskörpers 15 erfolgt durch ein Federelement 16, welches ebenfalls in dem Medienleitungsabschnitt 11 angeordnet ist. Der Ventilsitz 14 des Rückschlagventils 13 ist in diesem Ausführungsbeispiel zwischen dem Filterabschnitt 17 und dem Kupplungsabschnitt 3 der Filterpatrone angeordnet, um einen Rückfluss des bereits gereinigten Mediums von dem Medienleitungsabschnitt 11 in den Filterabschnitt 17 zu vermeiden.

Der Kupplungsabschnitt 3 ist als Steckverbindung 4 ausgebildet, so dass die Patrone 1 mit einer Innenseite einer Medienleitung kuppelbar ist. An seinem Umfang 7 weist die Steckverbindung 4 eine Ausnehmung 8 mit einem darin angeordneten Dichtelement 9 auf, um die Medienleitung, in die die Filterpatrone einsetzbar ist, in radialen Richtung abzudichten. Wie bereits in Figur 1 beschrieben, steht der Filterabschnitt 17 über eine zentrale Bohrung in dem Flansch 10 in Fluidverbindung mit dem Medienleitungsabschnitt 11. Neben den Bohrungen 21 in der Mantelfläche 19 und in der Stirnfläche 20 der hohlen Filterhülse 18 weist der Filterabschnitt 17 einen Aufnahmebereich 22 für eine Dichtscheibe 23 zum axialen Abdichten der die Filterhülse 17 aufnehmenden Medienleitung auf.

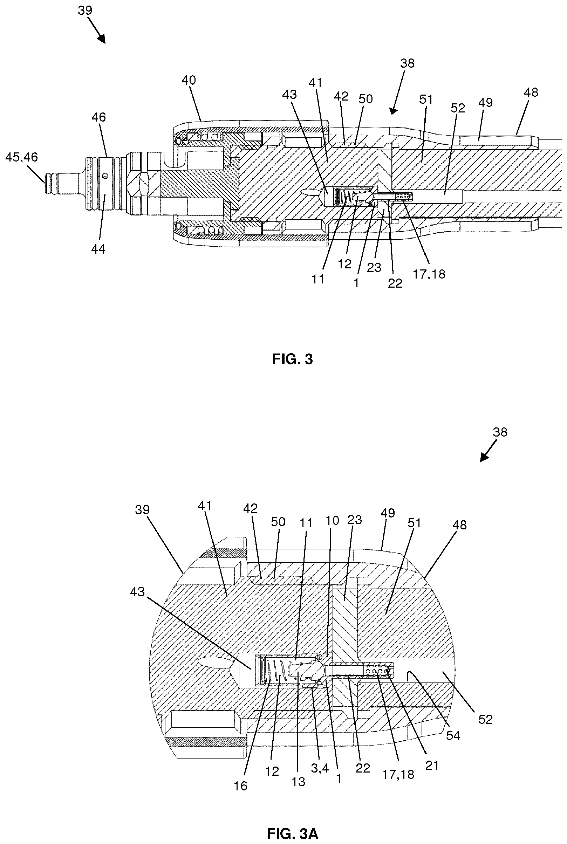

In Figur 3 ist ein Schnitt durch einen medizinischen, insbesondere dentalen, Adapter 39 mit dem ersten Ausführungsbeispiel der Filterpatrone 1, wie in der Figur 2 gezeigt, dargestellt, wobei der Adapter 39 mittels einer Kupplungsvorrichtung 38 an einen Versorgungsschlauch 48 gekuppelt ist. Der medizinische Adapter 39 selbst ist durch ein Gehäuseteil 40 gebildet an dessen hinteren Ende ein erstes Kupplungsteil 41 in Form eines Zapfens zum Ankuppeln des Adapters 39 an den Versorgungsschlauch 48 angeordnet ist. Der Versorgungsschlauch 48 weist hierzu ein zweites Kupplungsteil 51 auf, welches von einer Außenhülse 49 umgeben ist. Die Hülse 49 dient zum Kuppeln beider Kupplungsteile 41, 51 der Kupplungsvorrichtung 38. Hierzu ist an deren Innenseite ein Innengewinde 50 vorgesehen, welches mit einem Außengewinde 42 an dem Kupplungszapfen 41 des Adapters 39 verbindbar ist. Durch Aufschrauben der Außenhülse 49 des Schlauches 48 werden beide Kupplungsteile 41, 51 miteinander gekuppelt. Am vorderen Ende des Adapters 39 ist ein weiteres Kupplungsteil 44 zur Aufnahme eines medizinischen, insbesondere dentalen, Hand- oder Winkelstücks vorgesehen. Dieses Kupplungsteil 44 ist ebenfalls in Form eines Zapfens ausgebildet, so dass das Hand- oder Winkelstück aufsteckbar ist. Der Zapfen 44 weist eine Mantelfläche 46 auf, welche durch eine Stirnwand 45 begrenzt ist. Durch den Adapter 39 erstreckt sich zumindest eine erste Medienleitung 43, welche eine Austrittsöffnung 46 an der Stirnseite 45 des Kupplungszapfens 44 aufweist. Diese Leitung 43 dient zur Kühlung der von den Hand- oder Winkelstücken angetriebenen Behandlungswerkzeuge und der Arbeitsbereiche, mit Spraywasser und/oder Sprayluft. Zur Bereitstellung des Spraywassers und/ oder der Sprayluft, weist der Versorgungsschlauch 48 eine zweite Medienleitung 52 auf, welche sich durch den Schlauch 48 bis zu einer Medienquelle erstreckt. Die erste und zweite Medienleitung 43, 52 in den beiden Kupplungsteilen 41, 51 sind hierbei mittels der Kupplungsvorrichtung 38 miteinander kuppelbar.

Um schließlich Verstopfungen in den Kanälen der dentalen Hand- oder Winkelstücke sowie in der zumindest einen ersten Leitung 43 in dem medizinischen Adapter 39 zu vermeiden, ist in der ersten und zweiten Medienleitung 43, 52 die Filterpatrone 1 aus Figur 1 und Figur 2 aufgenommen. Hierbei ist der erste Teil der Filterpatrone 1, aufweisend den Medienleitungsabschnitt 11 sowie den Regelungsabschnitt 12, in der ersten Medienleitung 43 des Adapters 39 angeordnet. Der zweite Teil, der Filterabschnitt 17, hingegen, aufweisend die hohle Filterhülse 18, erstreckt sich in die zweite Medienleitung 52 des Versorgungsschlauches 48. Dies ermöglicht, die Filterpatrone 1, insbesondere den Filterabschnitt 17, im Entkuppelten Zustand beider Kupplungsteile 41, 51 zu reinigen, da dieser Abschnitt 17 hierbei frei zugänglich ist. Zwischen beiden Kupplungsteilen 41, 51 ist eine Dichtscheibe 23 angeordnet, um die zweite Medienleitung 52 in axialer Richtung abzudichten. Diese Scheibe 23 wird auf die Filterpatrone 1, insbesondere auf eine Aufnahme 22 des Filterabschnitts 17, aufgesteckt.

In Figur 3A ist ebenfalls in Schnittdarstellung ein Ausschnitt aus dem medizinischen, insbesondere dentalen, Adapter 39 aus Figur 3 gezeigt. Dieser Ausschnitt zeigt die Kupplungsvorrichtung 38, insbesondere das erste Kupplungsteil 41 des Adapters 39 sowie das zweite Kupplungsteil 51 des Versorgungsschlauches 48, und die darin angeordnete Filterpatrone 1 in einer Detailansicht. Wie bereits in Figur 3 beschrieben, sind beide Kupplungsteile 41, 51 über die Außenhülse 49 des Versorgungsschlauches 48 und einer Schraubverbindung 42, 50 miteinander gekuppelt. Beide Kupplungsteile 41, 51 weisen jeweils zumindest eine plane Stirnfläche auf, zwischen welchen im gekuppelten Zustand die Dichtscheibe 23 angeordnet ist, um die beiden Medienleitungen 43, 52 des Adapters 39 und des Versorgungsschlauches 48 gegen Fluidaustritt abzudichten. In der ersten und zweiten Medienleitung 43, 52 der beiden Kupplungsteile 41, 51 ist die Filterpatrone 1 aufgenommen. Dies erfolgt insbesondere über einen Kupplungsabschnitt 3 an der Filterpatrone 1, welcher als Steckverbindung 4 ausgebildet ist. Neben der Steckverbindung 4 weist der Kupplungsabschnitt 3 zusätzlich einen Flansch 10 zum axialen Abdichten der die Filterpatrone 1 aufnehmenden ersten Medienleitung 43 auf. Durch den Kupplungsabschnitt 3 erstreckt sich der Medienleitungsabschnitt 11, in welchem der Regelungsabschnitt 12 mit dem Rückschlagventil 13 und dem Federelement 16 angeordnet ist. Die hohle Filterhülse 18 des Filterabschnitts 17, aufweisend den Aufnahmebereich 22 für die Dichtscheibe 23, erstreckt sich von dem Flansch 10 in die zweite Medienleitung 52 des Versorgungsschlauches 48. Da die Filterhülse 18 mit den mehreren Bohrungen 21 einen kleineren Querschnitt als die zweite Medienleitung 52 des Versorgungsschlauches 48 aufweist, insbesondere die Mantelfläche der Hülse 18 beabstandet von der Innenseite 54 der zweiten Medienleitung 52 angeordnet ist, ist die Filterhülse 18 von mehreren Seiten her umströmbar.

Die Filterpatrone 1 sowie die Anordnung der Patrone 1 in der Kupplungsvorrichtung 38 ermöglicht somit, dass eine Verunreinigung der ersten Medienleitung 43 des medizinischen Adapters 39 vermieden wird. Dies erfolgt insbesondere durch eine Trennung der Patrone 1 in einen Kupplungsabschnitt 3 sowie in einen Filterabschnitt 17, wobei lediglich der Kupplungsabschnitt 3 in der ersten Leitung 43 aufgenommen wird, welche vor Verunreinigungen geschützt werden soll. Der Filterabschnitt 17 mit den gefilterten Schmutzpartikeln verbleibt in der zweiten Leitung 52 des Versorgungsschlauches 48, in welchem das verunreinigte Spraymedium geleitet wird. Zusätzlich wird durch den Regelungsabschnitt 12 der Filterpatrone 1, welcher in dem Kupplungsabschnitt 12 angeordnet ist, einen Rückfluss des bereits gereinigten Mediums von dem Medienleitungsabschnitt 11 zurück in den Filterabschnitt 17 verhindert. Durch die erfindungsgemäße Filterpatrone 1 ist es somit möglich, die Medienleitung 43 des Adapters gänzlich vor Verunreinigungen zu schützen. Dies ist mit den im Stand der Technik bekannten Patronen nicht möglich, da bei diesen die Filterelemente mit den gefilterten Schmutzpartikeln in jenen Medienleitungen aufgenommen werden, welche vor Verunreinigungen geschützt werden sollen.

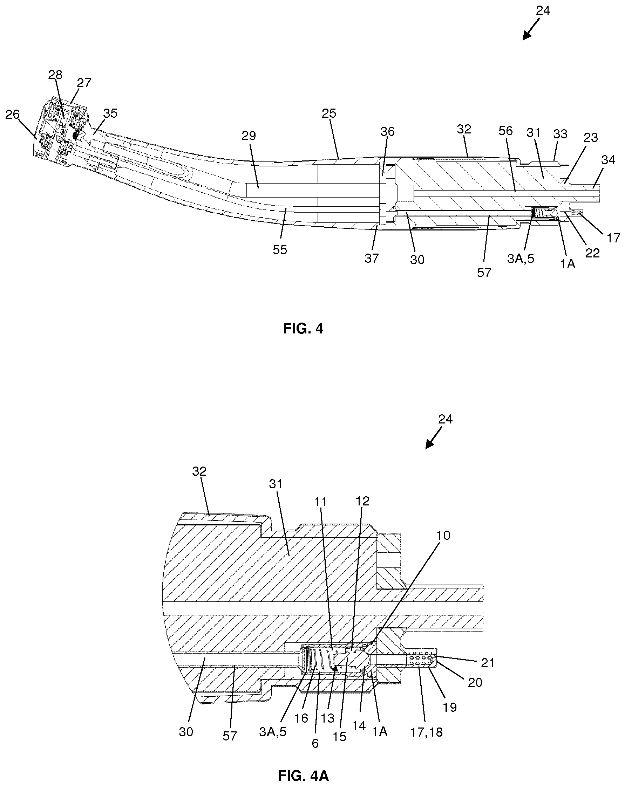

Figur 4 zeigt einen Schnitt durch ein medizinisches, insbesondere dentales, Winkelstück 24 mit einem zweiten Ausführungsbeispiel der Filterpatrone 1A. Das Winkelstück 24 weist ein Griffstück 25 und ein gewinkelt daran angeordnetes Kopfstück 26 auf. Das Kopfstück 26 selbst weist ein Gehäuse mit einem Halsstück 35 zur Aufnahme eines Turbinenantriebs sowie einen Druckknopf 27 zum Betätigen einer im Kopfstück angeordneten Werkzeugaufnahme 28 auf. Der Turbinenantrieb ist zusammen mit der Werkzeugaufnahme 28 mittels eines oberen und unteren Lagers drehbar in dem Kopfstück 26 gelagert. In dem Griffstück 25 ist ein Treibluftrohr 29 aufgenommen, welches zur Zuführung der Treibluft zu dem Turbinenantrieb dient. Das Treibluftrohr 29 ist hierzu als Verbindungselement ausgebildet, um zusammen mit dem gegen einen Anschlag 37 gelagerten Spannelement 36, welches gleichzeitig zur Positionierung des Treibluftrohrs 29 in dem Griffstück 25 dient, das Kopfstück 26 mit dem Griffstück 25 zu verspannen. Neben dem Treibluftrohr 29 ist des Weiteren ein Sprayrohr 55 für Spraywasser und/ oder Sprayluft in dem Griffstück 25 angeordnet. Diese dient zur Kühlung der angetriebenen Behandlungswerkzeuge sowie der Arbeitsbereiche und erstreckt sich von einem am hinteren Ende des Winkelstücks 24 angeordneten Kupplungsstück 31 bis zu der Werkzeugaufnahme 28. In dem Kupplungsstück 31 sind zumindest zwei Bohrungen 30 und 56 angebracht, welche zusammen mit den Rohren 29 und 55 jeweils eine Treibluftleitung sowie eine Medienleitung bilden. Zumindest in die Bohrung 30 ist ein weiteres Rohrstück 57 eingesetzt. Das Kupplungsstück 31 weist neben den Bohrungen 30, 56 und dem Rohrstück 57 einen Kupplungszapfen 34 auf, durch welchen sich die Treibluftleitung erstreckt. Eine Kupplungshülse 32, welche mit dem Griffstück 25 verbunden ist, umgibt das Kupplungsstück 31. Diese Hülse 32 dient zum Ankuppeln eines Versorgungsschlauches an das Winkelstück 24. Hierzu weist diese ein Außengewinde 33 zum Aufschrauben des Versorgungsschlauches auf.

Um das Eindringen von Verunreinigungen in die Medienleitung des dentalen Hand- oder Winkelstück 24 zu vermeiden, ist in dieser Medienleitung ein zweites Ausführungsbeispiel der Filterpatrone 1 aufgenommen. Die Patrone 1A ist hierbei mittels eines Kupplungsabschnitts 3A, welcher eine Schraubverbindung 5 aufweist, auf das Rohrstück 57 der Medienleitung aufgeschraubt. Wie bei dem ersten Ausführungsbeispiel der Patrone ist der Filterabschnitt 17 über einen Flansch mit dem Kupplungsabschnitt 3A verbunden, wobei lediglich der Kupplungsabschnitt 3A in der Medienleitung des dentalen Winkelstück 24 aufgenommen ist, welche vor Verunreinigungen geschützt werden soll. Zumindest der Filterabschnitt 17 mit den gefilterten Schmutzpartikeln verbleibt außerhalb der Medienleitung und ragt somit im gekuppelten Zustand über die kupplungsseitige Endfläche des Winkelstücks 24 hinaus. Auf den Kupplungszapfen 34 und den Filterabschnitt 17 ist die Dichtscheibe 23 aufgesetzt. Der überstehende Teil der Patrone 1A kann zusätzlich als Kupplung, insbesondere als Steckkupplung, ausgebildet ein, auf welche eine Medienleitung, insbesondere eines Versorgungsschlauches, aufsetzbar ist.

In Figur 4A ist ebenfalls in Schnittdarstellung ein Ausschnitt aus dem medizinischen, insbesondere dentalen, Winkelstück 24 aus Figur 4 dargestellt. Dieser Ausschnitt zeigt den Kupplungsbereich des Winkelstück 24 sowie das zweite Ausführungsbeispiel der Filterpatrone 1A im Detail. Wie in Figur 4 beschrieben, weist das Winkelstück 26 an seinem hinteren Ende ein Kupplungsstück 31 auf, welches von einer Kupplungshülse 32 umgeben ist. Durch das Kupplungsstück 31 erstreckt sich die Bohrung 30 zur Aufnahme eines Rohrstücks 57, an welches die Filterpatrone 1A kuppelbar ist. Hierdurch ist es möglich die Patrone 1A in dem Kupplungsstück 31 aufzunehmen. Dies erfolgt über den Kupplungsabschnitt 3A an der Filterpatrone 1A, welcher neben der Steckverbindung und dem Flansch 10 die Schraubverbindung 5 aufweist. Die Schraubverbindung 5 ist bevorzugt durch ein Gewinde an der Innenseite 6 des hülsenförmigen Kupplungsabschnitts 3A der Patrone 1A gebildet, welche auf ein Außengewinde an der Außenseite des Rohrstücks 57 aufschraubbar ist. Auch in diesem Ausführungsbeispiel erstreckt sich der Medienleitungsabschnitt 11, in welchem der Regelungsabschnitt 12 mit dem Rückschlagventil 13, aufweisend den Regelungskörper 15 und das Federelement 16, angeordnet ist, durch den Kupplungsabschnitt 3A der Patrone 1A. Der Ventilsitz 14 des Rückschlagventils 13 ist auch hier zwischen dem Filterabschnitt 17 und dem Kupplungsabschnitt 3A angeordnet, um einen Rückfluss der bereits gereinigten Medien in den Filterabschnitt 17, bzw. in die hohle Filterhülse 18 mit den mehreren Bohrungen 21 an der Mantelfläche 19 sowie der Stirnfläche 20, zu verhindern.

## Patentansprüche

1. Filterpatrone (1, 1A) für eine medizinische, insbesondere dentale, Kupplungsvorrichtung (38) zum Anordnen an einer an einem Kupplungsteil (31, 41, 51) vorgesehenen Medienleitung (30, 43, 52), wobei die Filterpatrone (1, 1A) ein erstes freies Ende und ein zweites freies Ende aufweist, zwischen denen sich die Filterpatrone (1, 1A) erstreckt und wobei die Filterpatrone (1, 1A) umfasst: einen Kupplungsabschnitt (3, 3A) zur lösbaren Aufnahme der Patrone (1, 1A) in oder an der Medienleitung (30, 43, 52) des Kupplungsteils (31, 41, 51), einen Medienleitungsabschnitt (11), welcher sich durch den Kupplungsabschnitt (3, 3A) erstreckt sowie einen Filterabschnitt (17), welcher in Fluidverbindung mit dem Medienleitungsabschnitt (11) steht und außerhalb des Medienleitungsabschnitts (11) an dem Kupplungsabschnitt (3, 3A) der Filterpatrone (1, 1A) angeordnet ist, wobei der Filterabschnitt (17) längs und/ oder quer zur Strömungsrichtung des zu reinigenden Mediums durchströmbar ist und durch eine hohle Filterhülse (18) mit einer Mantelfläche (19) gebildet ist, die an dem ersten freien Ende durch eine Stirnfläche (20) geschlossen ist, wobei die Stirnfläche (20) und/ oder die Mantelfläche (19) der Filterhülse (18) eine Mehrzahl von durchströmbaren Bohrungen (21) aufweist / aufweisen, die als Sieb wirken, um Verunreinigungen aus einem Spraymedium zu filtern, **dadurch gekennzeichnet, dass** die Stirnfläche (20) der hohlen Filterhülse (18) das erste freie Ende der Filterpatrone (1, 1A) bildet.

2. Filterpatrone (1, 1A) nach Anspruch 1, **dadurch gekennzeichnet, dass** der Medienleitungsabschnitt (11) einen Regelungsabschnitt (12) zur Regelung des Mediendurchflusses eines zu reinigenden Mediums durch die Filterpatrone (1, 1A) aufweist.

3. Filterpatrone (1, 1A) nach Anspruch 1 oder 2, **dadurch gekennzeichnet, dass** der Filterabschnitt (17) zumindest teilweise aus einem, insbesondere porösem, Filtermaterial besteht, welches für das Medium durchströmbar ausgebildet ist.

4. Filterpatrone (1, 1A) nach Anspruch 1, 2 oder 3, **dadurch gekennzeichnet, dass** der Filterabschnitt (17) einen Aufnahmebereich (22) für eine Dichtscheibe (23) zum axialen Abdichten der die Filterhülse (17) aufnehmenden Medienleitung (30, 43, 52) aufweist.

5. Filterpatrone (1, 1A) nach Anspruch 4, **dadurch gekennzeichnet, dass** die Mehrzahl von durchströmbaren Bohrungen (21) der hohlen Filterhülse (18) zwischen der Stirnfläche (20) und dem Aufnahmebereich (22) für eine Dichtscheibe (23) angeordnet sind.

6. Filterpatrone (1, 1A) nach einem der vorherigen Ansprüche, **dadurch gekennzeichnet, dass** der Filterabschnitt (17) lösbar von dem Kupplungsabschnitt (3, 3A) ausgebildet ist.

7. Filterpatrone (1, 1A) nach einem der vorherigen Ansprüche, **dadurch gekennzeichnet, dass** der Kupplungsabschnitt (3, 3A) als Steckverbindung (4) ausgebildet ist, so dass die Patrone (1, 1A) mit einer Innen- oder Außenseite (53, 54) der Medienleitung (30, 43, 52) kuppelbar ist.

8. Filterpatrone (1, 1A) nach einem der vorherigen Ansprüche, **dadurch gekennzeichnet, dass** der Kupplungsabschnitt (3, 3A) als Schraubverbindung (5), insbesondere mit einem Außengewinde, ausgebildet ist, welche mit einem Gewinde an einer der beiden Medienleitungen (30, 43, 52) kuppelbar ist.

9. Filterpatrone (1, 1A) nach einem der vorherigen Ansprüche **dadurch gekennzeichnet, dass** der Kupplungsabschnitt (3, 3A) an seiner Innenseite (6) oder an seinem Umfang (7) eine Ausnehmung (8) mit einem darin angeordneten Dichtelement (9) zum radialen Abdichten der die Filterpatrone (1, 1A) aufnehmenden Medienleitung (30, 43, 52) aufweist.

10. Filterpatrone (1, 1A) nach einem der vorherigen Ansprüche, **dadurch gekennzeichnet, dass** der Kupplungsabschnitt (3, 3A) einen Flansch (10) zum axialen Abdichten der die Filterpatrone (1, 1A) aufnehmenden Medienleitung (30, 43, 52) aufweist.

11. Filterpatrone (1, 1A) nach einem der Ansprüche 2 - 10, **dadurch gekennzeichnet, dass** der Regelungsabschnitt (12) ein Rückschlagventil (13) mit einem Ventilsitz (14) und einem entgegen der Strömungsrichtung des zu reinigende Mediums und dem Ventilsitz (14) vorgespannten Regelungskörper (15) aufweist.

12. Filterpatrone (1, 1A) nach Anspruch 11, **dadurch gekennzeichnet, dass** der Ventilsitz (14) des Rückschlagventils (13) derart angeordnet ist, dass ein Rückfluss des gereinigten Mediums von dem Medienleitungsabschnitt (11) in den Filterabschnitt (17) verhindert wird.

13. Filterpatrone (1, 1A) nach einem der Ansprüche 2 - 12, **dadurch gekennzeichnet, dass** der Regelungsabschnitt (12) lösbar von der Filterpatrone (1, 1A) ausgebildet ist, so dass der Regelungsabschnitt (12), der Kupplungsabschnitt (3, 3A) und/ oder der Filterabschnitt (17) reinigbar sind.

14. Medizinischer, insbesondere dentaler, Adapter (38) mit zumindest einer an einem ersten Kupplungsteil (41) angeordneten ersten Medienleitung (43), welche mit einer an einem zweiten Kupplungsteil (51) angeordneten zweiten Medienleitung (52) kuppelbar ausgebildet ist, **gekennzeichnet durch** eine Filterpatrone (1, 1A) nach einem der Ansprüche 1 bis 13.

15. Medizinisches, insbesondere dentales, Hand- oder Winkelstück (24) mit einer Werkzeugaufnahme (28) für ein Behandlungswerkzeug sowie einem Kupplungsteil (31), von welchem sich eine Medienleitung (30) in Richtung der Werkzeugaufnahme (28) erstreckt, **gekennzeichnet durch** eine Filterpatrone (1, 1A) nach einem der Ansprüche 1 bis 13.

## Claims

1. A filter cartridge (1, 1A) for a medical, in particular dental, coupling device (38) for arrangement on a media line (30, 43, 52) provided on a coupling part (31, 41, 51), wherein the filter cartridge (1, 1A) comprises a first free end and a second free end between which the filter cartridge (1, 1A) extends and wherein the filter cartridge (1, 1A) comprises: a coupling section (3, 3A) for detachably holding the cartridge (1, 1A) in or on the media line (30, 43, 52) of the coupling part (31, 41, 51), a media line section (11) which extends through the coupling section (3, 3A) as well as a filter section (17) which is in fluid connection with the media line section (11) and is arranged outside of the media line section (11) on the coupling section (3, 3A) of the filter cartridge (1, 1A), wherein through the filter section (17) a medium can flow longitudinally and/or transversely relative to the direction of flow of the medium to be cleaned and wherein the filter section (17) is formed by a hollow filter sleeve (18) having a lateral surface (19) which is closed at the first free end by an end wall (20), wherein the end wall (20) and/or the lateral surface (19) of the filter sleeve (18) comprise/ comprises a plurality of holes (21) through which a medium can flow and which act as a screen to filter out impurities from a spray medium, **characterized in that**
the end wall (20) of the hollow filter sleeve (18) forms the first free end of the filter cartridge (1, 1A).

2. The filter cartridge (1, 1A) according to Claim 1, **characterized in that** the media line section (11) comprises a regulating section (12) for regulating the media flow of a medium to be cleaned through the filter cartridge (1, 1A).

3. The filter cartridge (1, 1A) according to Claim 1 or 2, **characterized in that** the filter section (17) consists at least in part of a filter material, which is porous in particular and is designed so that the medium can flow through it.

4. The filter cartridge (1, 1A) according to Claim 1, 2 or 3, **characterized in that** the filter section (17) comprises a receiving area (22) for a sealing washer (23) for axially sealing the media line (30, 43, 52) that holds the filter sleeve (17).

5. The filter cartridge (1, 1A) according to Claim 4, **characterized in that** the plurality of holes (21) of the hollow filter sleeve (18) through which a medium can flow are arranged between the end wall (20) and the receiving area (22) for a sealing washer (23).

6. The filter cartridge (1, 1A) according to any one of the preceding Claims, **characterized in that** the filter section (17) is designed to be detachable from the coupling section (3, 3A).

7. The filter cartridge (1, 1A) according to any one of the preceding Claims, **characterized in that** the coupling section (3, 3A) is designed as a plug connection (4) so that the cartridge (1, 1A) can be coupled to an inside or an outside (53, 54) of the media line (30, 43, 52).

8. The filter cartridge (1, 1A) according to any one of the preceding Claims, **characterized in that** the coupling section (3, 3A) is designed as a screw connection (5), in particular with an outside thread, which can be coupled with a thread on one of the two media lines (30, 43, 52).

9. The filter cartridge (1, 1A) according to any one of the preceding Claims, **characterized in that** the coupling section (3, 3A) comprises on its inside (6) or on its circumference (7) a recess (8) with a sealing element (9) arranged in it for radially sealing the media line (30, 43, 52) that holds the filter cartridge (1, 1A).

10. The filter cartridge (1, 1A) according to any one of the preceding Claims, **characterized in that** the coupling section (3, 3A) comprises a flange (10) for axially sealing the media line (30, 43, 52) that holds the filter cartridge (1, 1A).

11. The filter cartridge (1, 1A) according to any one of the Claims 2 - 10, **characterized in that** the regulating section (12) comprises a non-return valve (13) with a valve seat (14) and a regulating body (15) which is prestressed against the direction of flow of the medium to be cleaned and the valve seat (14).

12. The filter cartridge (1, 1A) according to Claim 11, **characterized in that** the valve seat (14) of the non-return valve (13) is arranged such that a return flow of the cleaned medium from the media line section (11) into the filter section (17) is prevented.

13. The filter cartridge (1, 1A) according to any one of the Claims 2 - 12, **characterized in that** the regulating section (12) is designed to be detachable from the filter cartridge (1, 1A) so that the regulating section (12), the coupling section (3, 3A) and/or the filter section (17) can be cleaned.

14. A medical, in particular dental, adapter (38) having at least one first media line (43) which is arranged on a first coupling part (41) and is designed to be coupled to a second media line (52) which is arranged on a second coupling part (51), **characterized by** a filter cartridge (1, 1A) according to any one of Claims 1 to 13.

15. A medical, in particular dental, handpiece or contra-angle handpiece (24) having a tool receptacle (28) for a treatment tool as well as a coupling part (31) from which a media line (30) extends in the direction of the tool receptacle (28), **characterized by** a filter cartridge (1, 1A) according to any one of Claims 1 to 13.

## Revendications

1. Cartouche de filtre (1, 1A) pour un dispositif d'accouplement médical, (38), en particulier dentaire pour la mise en place au niveau d'un conduit de fluides (30, 43, 52) prévu au niveau d'un élément d'accouplement (31, 41, 51), dans laquelle la cartouche de filtre (1, 1A) présente une première extrémité libre et une deuxième extrémité libre entre lesquelles la cartouche de filtre (1, 1A) s'étend et dans laquelle la cartouche de filtre (1, 1A) comprend: une partie d'accouplement (3, 3A) pour la réception amovible de la cartouche (1, 1A) dans ou sur le conduit de fluides (30, 43, 52) de l'élément d'accouplement (31, 41, 51), une partie de conduite de fluides (11), laquelle s'étend à travers la partie d'accouplement (3, 3A) ainsi qu'une partie de filtre (17), laquelle est en communication fluidique avec la partie de conduite de fluides (11) et est disposée à l'extérieur de la partie de conduite de fluides (11) au niveau de la partie d'accouplement (3, 3A) de la cartouche de filtre (1, 1A), dans laquelle la partie de filtre (17) peut être traversée par écoulement longitudinalement et/ou transversalement à la direction d'écoulement du fluide à nettoyer et est formée par une gaine de filtre creuse (18) avec une surface enveloppante (19), laquelle est fermée au niveau de la première extrémité libre par une surface frontale (20), dans laquelle la surface frontale (20) et/ou la surface enveloppante (19) de la gaine de filtre (18) présente/présentent une pluralité de perforations (21) pouvant être traversées par un écoulement, lesquelles font office de tamis pour filtrer des impuretés dans un fluide de spray, **caractérisée en ce que**
la surface frontale (20) de la gaine de filtre creuse (18) forme la première extrémité libre de la cartouche de filtre (1, 1A).

2. Cartouche de filtre (1, 1A) selon la revendication 1, **caractérisée en ce que** la partie de conduite de fluides (11) présente une partie de régulation (12) pour la régulation de l'écoulement de fluide d'un fluide à nettoyer via la cartouche de filtre (1, 1A).

3. Cartouche de filtre (1, 1A) selon la revendication 1 ou 2, **caractérisée en ce que** la partie de filtre (17) se compose au moins en partie d'un matériau de filtrage en particulier poreux, lequel est réalisé de manière à pouvoir être traversé par un écoulement pour le fluide.

4. Cartouche de filtre (1, 1A) selon la revendication 1, 2 ou 3, **caractérisée en ce que** la partie de filtre (17) présente une zone de réception (22) pour une rondelle d'étanchéité (23) pour l'étanchéification axiale du conduit de fluides (30, 43, 52) réceptionnant la cartouche de filtre (17).

5. Cartouche de filtre (1, 1A) selon la revendication 4, **caractérisée en ce que** la majorité des perforations (21), pouvant être traversées par un écoulement, de la gaine de filtre creuse (18) sont disposées entre la surface frontale (20) et la zone de réception (22) pour une rondelle d'étanchéité (23).

6. Cartouche de filtre (1, 1A) selon l'une des revendications précédentes, **caractérisée en ce que** la partie de filtre (17) est réalisée de manière détachable de la partie d'accouplement (3, 3A).

7. Cartouche de filtre (1, 1A) selon l'une des revendications précédentes, **caractérisée en ce que** la partie d'accouplement (3, 3A) est réalisée en tant qu'assemblage par enfichage (4) de sorte que la cartouche (1, 1A) peut être accouplée avec un côté intérieur ou extérieur (53, 54) du conduit de fluides (30, 43, 52).

8. Cartouche de filtre (1, 1A) selon l'une des revendications précédentes, **caractérisée en ce que** la partie d'accouplement (3, 3A) est réalisée en tant qu'assemblage à visser (5), en particulier avec un filetage extérieur, lequel peut être accouplé avec un filetage au niveau de l'un des deux conduits de fluides (30, 43, 52).

9. Cartouche de filtre (1, 1A) selon l'une des revendications précédentes, **caractérisée en ce que** la partie d'accouplement (3, 3A) présente sur son côté intérieur (6) ou sur sa périphérie (7) un évidement (8) avec un élément d'étanchéification (9) disposé à l'intérieur pour l'étanchéification radiale du conduit de fluides (30, 43, 52) réceptionnant la cartouche de filtre (1, 1A).

10. Cartouche de filtre (1, 1A) selon l'une des revendications précédentes, **caractérisée en ce que** la partie d'accouplement (3, 3A) présente une collerette (10) pour l'étanchéification axiale du conduit de fluides (30, 43, 52) réceptionnant la cartouche de filtre (1, 1A).

11. Cartouche de filtre (1, 1A) selon l'une des revendications 2-10, **caractérisée en ce que** la partie de régulation (12) présente une soupape anti-retour (13) avec un siège de soupape (14) et un corps de régulation (15) précontraint à l'encontre de la direction d'écoulement du fluide à nettoyer et le siège de soupape (14).

12. Cartouche de filtre (1, 1A) selon la revendication 11, **caractérisée en ce que** le siège de soupape (14) de la soupape anti-retour (13) est disposé de manière à ce qu'un reflux du fluide nettoyé de la partie de conduite de fluides (11) dans la partie de filtre (17) soit empêché.

13. Cartouche de filtre (1, 1A) selon l'une des revendications 2-13, **caractérisée en ce que** la partie de régulation (12) est réalisée de manière détachable de la cartouche de filtre (1, 1A) de sorte que la partie de régulation (12), la partie d'accouplement (3, 3A) et/ou la partie de filtre (17) peuvent être nettoyées.

14. Adaptateur médical (38), en particulier dentaire avec au moins un premier conduit de fluides (43) disposé au niveau d'un premier élément d'accouplement (41), lequel est réalisé de manière à pouvoir être accouplé avec un deuxième conduit de fluides (52) disposé au niveau d'un deuxième élément d'accouplement (51), **caractérisé par** une cartouche de filtre (1, 1A) selon l'une des revendications 1 à 13.

15. Pièce à main ou coudée médicale (24), en particulier dentaire avec un logement d'outil (28) pour un outil de traitement ainsi qu'un élément d'accouplement (31) à partir duquel un conduit de fluides (30) s'étend en direction du logement d'outil (28), **caractérisée par** une cartouche de filtre (1, 1A) selon l'une des revendications 1 à 13.
